Europäisches Patentamt

(19) European Patent Office

Office européen des brevets

(11) Publication number: **0 083 854**
**A2**

(12) **EUROPEAN PATENT APPLICATION**

(21) Application number: **82306653.5**

(22) Date of filing: **13.12.82**

(51) Int. Cl.³: **G 01 N 21/39**
**G 01 N 1/22**

(30) Priority: **07.01.82 GB 8200433**

(43) Date of publication of application:
**20.07.83 Bulletin 83/29**

(84) Designated Contracting States:
**DE FR GB IT NL**

(71) Applicant: **IMPERIAL CHEMICAL INDUSTRIES PLC**
**Imperial Chemical House Millbank**
**London SW1P 3JF(GB)**

(72) Inventor: **Cramp, John Harry William**
**St. Cloud 37 Eccleston Gardens**
**St. Helens WA10 3B1 Mereseyside(GB)**

(74) Representative: **Hall, David Brian et al,**
**Imperial Chemical Industries PLC Legal Department:**
**Patents Thames House North Millbank**
**London SW1P 4QG(GB)**

(54) **Sampling device.**

㉟ In a method for remote quantitative monitoring of a selected gas in a gaseous environment by passing through the environment radiation of a wavelength absorbable by the selected gas, an improvement comprises taking a sample of a part of the gaseous environment through which the collected radiation does not pass, and causing the sample to be introduced into a position through which the collected radiation does pass, thereby to get absorption of the radiation according to the quantity of the selected gas in the sample.

EP 0 083 854 A2

## SAMPLING DEVICE

The invention relates to remote monitoring of gases, such as gaseous pollutants, within a gaseous environment.

In various locations there is a need to carry out remote quantitative monitoring of selected gases in the gaseous environments of such locations, for example to detect the escape of any toxic or inflammable gases from a chemical plant, or to measure the level of any such gas within the immediate environment of the plant. One known method of carrying out such monitoring comprises passing through the gaseous environment, radiation of a wavelength absorbable by the selected gas, collecting at least some of the radiation after its passage through the gaseous environment, and detecting the amount of the selected radiation which has been absorbed during such passage. In practice the radiation may comprise both an absorbed wavelength and a reference wavelength which is not substantially absorbed by the selected gas, the ratio of the two wavelengths then giving a measure of the absorption, unaffected by intensity variations from other causes affecting both wavelengths.

A particularly sophisticated monitoring apparatus which has a scanning device for directing radiation from a laser source towards a plurality of locations sequentially, and collecting radiation which is reflected or scattered back in the direction of the apparatus for monitoring, is described in European Patent Application No. 26046 Al. This is a particularly versatile apparatus in that it enables a large area of chemical plant or other hazardous area to be continuously monitored. However even that apparatus can only detect escaped gas when the latter is in a part of the gaseous environment through which the collected radiation actually passes. Hence any leakage which may occur within a building on the site, behind an opaque object, or elsewhere outside the direct path of the radiation (whether using a scanning device or not), will not be detected immediately.

According to one aspect of the present invention, there is provided a method for remote quantitative monitoring of a selected gas in a gaseous environment by passing through the gaseous environment radiation of a wavelength absorbable by the selected gas, collecting at least some of the radiation after its passage through the gaseous environment, and detecting the amount of the selected radiation which has been absorbed during such passage; the improvement comprising taking a sample of a part of the gaseous environment through which the collected radiation does not pass, and causing the sample to be introduced into a position through which the collected radiation does pass, thereby to get absorption of the radiation according to the quantity of the selected gas in the sample.

The present method makes it possible to monitor gas in parts otherwise hidden from the radiation, without the need to provide additional monitoring devices, thereby reducing costs, and according to a further aspect of the invention an apparatus for carrying out the present method comprises means for taking a sample of a part of the gaseous environment through which the collected radiation does not pass, and means for introducing the sample into an absorption position through which the collected radiation does pass. Preferred apparatus comprises an inlet located in the part of the environment from which the sample is to be taken, an outlet positioned in or adjacent to a path of the collected radiation such that any outflowing gas enters the absorption position, pipework interconnecting the inlet with the outlet, and pump means to cause the sample to flow along the pipework.

We prefer to cause samples to pass intermittently into the absorption position, and to correlate the timing of such intermittent sampling with that of detecting any absorption of the radiation, thereby to enable any absorption due to the sample to be distinguished from any absorption due to the occurence of the selected gas elsewhere in the monitored environment.

Thus for example when used in conjunction with an apparatus emitting a stationary beam for monitoring the level of the selected gas in a part of the gaseous environment traversed by the beam, samples can be taken from elsewhere in the environment and puffed intermittently into the path of the radiation and any absorption thereby obtained can be distinguished by the above correlation. Similarly, when used with apparatus having scanning means for directing the radiation towards a plurality of locations sequentially, by synchronising the passage of samples into the absorption position with operation of the scanning means simultaneously to direct the radiation at the absorption position, maximum response can be achieved from the minimum quantity of sample gas when compared, for example, with a continuous feed irrespective of whether the beam is directed thereat or elsewhere. Moreover, by sampling less frequently than the scanning cycle, most suitably at intervals which are multiples of the scanning cycle, such as one sample in each two or three scanning cycles, the above correlation enables absorption by the sample to be distinguished from absorption elsewhere in the beam at the same angle of scan in essentially the same manner as that described above in respect of a stationary beam. A preferred apparatus is therefore one having intermittent sampling means for causing samples to pass intermittently into the absorption position, and a timing link for connecting the sampling means to means for detecting absorption of radiation thereby to provide a correlation of the timing of intermittent sampling with that of detecting any absorption of the radiation.

Sampling need not be restricted to only a single part of the gaseous environment. Thus, for example, when using a non-scanning apparatus we prefer that samples from different parts be introduced into the radiation path at different times, thereby to enable any detected absorption to be identified with the part from which the relevant sample was taken. In a scanning apparatus it is preferred that samples taken from different parts be introduced into different absorption positions, preferably nearer the source to increase sensitivity. It is further preferred to locate absorption positions where leakage of the selected gas cannot otherwise occur, e.g. by scanning beyond the confines of the gas-handling areas of the plant. Where this is not possible, a practical compromise is to locate such positions where gas leaks are most unlikely. Identification can then be assisted using a timing link, e.g. by puffing samples into the beam during alternate scans, as described above.

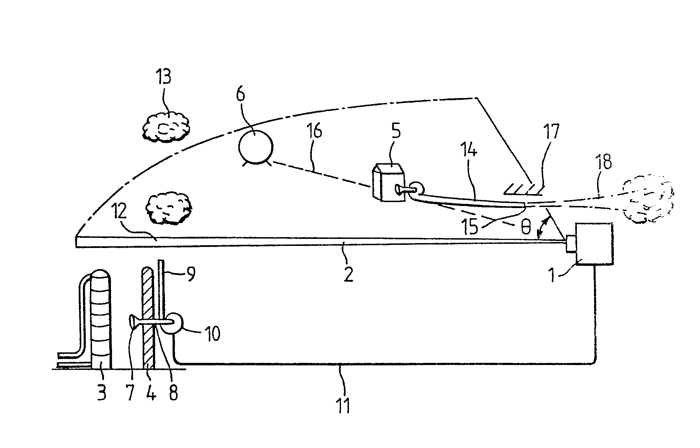

The invention is illustrated by the following description of a specific embodiment shown in the accompanying drawing. This is a diagrammatic sketch of a gas monitor scanning a chemical plant having various structures equipped with sampling means in the manner of the present invention.

The drawing shows a scanning monitor 1 containing a laser radiation source and detector. The radiation is emitted as a narrow beam 2, and the monitor (or optics therein) rotates about a vertical axis through an angle $\theta$, so that the beam scans over the segment shown. The emitted radiation strikes a scattering surface and some is returned back to a detector in the monitor. (In practice the monitor may be up a tower and pointing downwards so that the radiation is scattered back off the ground or off objects on the ground.

The beam is shown scanning above a reaction vessel 3 located behind a protective blast wall 4, a building 5 and gas reservoir 6, the interior of the building and the area behind the blast wall being hidden from the radiation. Behind the blast wall is an inlet 7 with pipework 8 leading to an outlet 9 via a pump 10. The pump is connected to the monitor by an electronic timing link 11, and each time the beam scans over the outlet, the pump withdraws a sample from adjacent the reactor and puffs it into the path of the beam, the interrogating position 12 thus being just above the outlet. Two previous samples are shown as clouds 13 above the outlet.

The building 5 is shown in line with the gas reservoir 6 (when viewed from the monitor) and it is desirable that any gas leaks from the reservoir be distinguishable from leaks occurring within the building. The sampling device is therefore provided with extended pipework 14 to enable its outlet 15 to be displaced to one side, well away from the line of vision 16 between the detector and gas reservoir 6 to ensure that no such confusion occurs. Indeed, when displacing the outlet to a position where it is the only possible source of the gas, there is no need for the beam to traverse the whole length of the plant site and back, with its attendant risk of irregular attenuation. Instead the pipework 14 is extended towards the monitor 1 so that the outlet is close to it, and adjacent scatter surface 17 is provided to return the beam to the detector in the monitor. This provides better control and enables the sensitivity to be increased where desirable. As this is at the edge of the site, there is less reason to sample intermittently, so no timing link is shown, and the sample emerges continuously from the outlet as a fan shaped plume 18, through which the beam passes at the end of each scan.

The invention has been illustrated by an example of gas monitoring in an external environment. However the present invention is also particularly useful for certain interior situations. Thus, for example, in stores and warehouses where gas leaks might occur from pressurised gas containers, or where volatile solvents are located, effective gas monitoring by scanning devices can be hampered by shelving, partitioning or structural supports. However, by locating sampling devices in each bay or set of shelves to puff their samples into an aisle between the bays, a simple non-scanning monitor directing a laser beam of appropriate wavelength down the aisle (suitably outside the path of any automatic stacking machine) can effectively monitor the environment and detect gas leaks occurring in any of the bays. Where simple detection is required, the sampling devices may act independently of the monitor, perhaps their simplest form being fans directed to promote a stream of air from each bay at risk, into the aisle. Indeed a similar effect can be achieved in a store with an air circulating system, by locating one or more air exits adjacent the path of the laser beam so that the natural flow of air through the store draws air from the bays at risk, through the laser beam to reach the air exit. Leakages can be detected in this simple manner, but to identify from which bay the leaked gas has originated, we prefer to use sampling devices connected to the monitor through a timing link so that the devices are operated to puff intermittent samples into the beam in sequence. A faulty bay can then be identified immediately, in substantially the same manner as described above the exterior situations.

CLAIMS

1. A method for remote quantitative monitoring of a selected gas in a gaseous environment by passing through the gaseous environment radiation of a wavelength absorbable by the selected gas, collecting at least some of the radiation after its passage through the gaseous environment, and detecting the amount of the selected radiation which has been absorbed during such passage; the improvement comprising taking a sample of a part of the gaseous environment through which the collected radiation does not pass, and causing the sample to be introduced into a position through which the collected radiation does pass, thereby to get absorption of the radiation according to the quantity of the selected gas in the sample.

2. A method according to Claim 1, which comprises causing samples to pass intermittently into the absorption position and correlating the timing of such intermittent sampling with that of detecting any absorption of the radiation, thereby to enable any absorption due to the sample to be distinguished from any absorption due to the occurence of the selected gas elsewhere in the monitored environment.

3. A method according to Claim 2 for use with apparatus having scanning means for directing the radiation towards a plurality of locations sequentially, which comprises synchronising the passing of samples into the absorption position with operation of the scanning means simultaneously to direct the radiation at the absorption position.

4. A method according to Claim 3 which comprises sampling at intervals which are multiples of the period of each scanning cycle.

5.    Apparatus for carrying out the method claimed in any one of the preceding claims, comprising means for taking a sample of a part of the gaseous environment through which the collected radiation does not pass, and means for introducing the sample into an absorption position through which the collected radiation does pass.

6.    Apparatus according to Claim 5, which comprises an inlet located in the part of the environment from which the sample is to be taken, an outlet positioned in or adjacent to a path of the collected radiation such that any outflowing gas enters the absorption position, pipework interconnecting the inlet with the outlet, and pump means to cause the sample to flow along the pipework.

7.    Apparatus according to Claim 5 or Claim 6, which comprises intermittent sampling means for causing samples to pass intermittently into the absorption position, and a timing link for connecting the sampling means to means for detecting absorption of the radiation thereby to provide a correlation of the timing of intermittent sampling with that of detecting any absorption of the radiation.

8.    Apparatus according to any one of Claims 5 to 7, which comprises scanning means for directing the radiation towards a plurality of locations sequentially, and means for synchronising the passing of samples into the absorption position with operation of the scanning means simultaneously to direct the radiation at the absorption position.

0083854